# FASCICULE DE BREVET EUROPEEN

(11) **EP 2 703 558 B1**
(45) Date de publication et mention de la délivrance du brevet: **10.12.2014**
(21) Numéro de dépôt: 13195033.9
(22) Date de dépôt: 03.08.2010
(51) Int. Cl.: D21H 17/33, D21H 17/41, D21H 17/44, D21H 17/45, D21H 21/10, D21H 21/18, C08F 8/00, C08F 8/44

(54) **Papier, carton, ou analogue contenant un copolymère cationique dérivé d'acrylamide**
Papier, Karton oder ähnliche Produkte, die ein kationisches Kopolymer enthalten, das ein Derivat von Acrylamid ist
Paper, cardboard, or the like containing a cationic copolymer derived from acrylamide

(30) Priorité: 04.08.2009 FR 0955471
(43) Date de publication de la demande: 05.03.2014
(62) Demande divisionnaire de: 10762727.5
(73) Titulaire: S.P.C.M. SA, 42160 Andrézieux Bouthéon (FR)
(72) Inventeur: Hund, René, 42390 VILLARS (FR); Auriant, Christophe, 42000 SAINT ETIENNE (FR)
(74) Mandataire: Cabinet Laurent & Charras

(56) Documents cités:
- WO-A2-2008/107620
- WO-A2-2009/013423
- DATABASE WPI Week 198016 Thomson Scientific, London, GB; AN 1980-27925C XP002718534, & JP S54 145790 A (SEIKO CHEM IND CO LTD) 14 novembre 1979 (1979-11-14)
- DATABASE WPI Week 199413 Thomson Scientific, London, GB; AN 1994-107406 XP002718535, & JP H06 57685 A (ARAKAWA CHEM IND LTD) 1 mars 1994 (1994-03-01)

## Description

L'invention concerne un papier, carton ou analogue contenant un ou des (co)polymères cationiques ou amphotères stables, obtenus par dégradation dite d'Hofmann effectuée sur un (co)polymère base comprenant de l'acrylamide ou dérivés et incorporant, en son sein même, au moins un composé polyfonctionnel contenant au moins 3 hétéroatomes présentant chacun au moins un hydrogène mobile. Ces (co)polymères cationiques ou amphotères sont utilisés comme agents de floculation, rétention et/ou drainage, et résistance à sec dans un procédé de fabrication de papier.

Plus précisément, selon l'invention, les (co)polymères cationiques ou amphotères à base d'acrylamide sont des polymères organiques caractérisés en ce qu'ils sont obtenus par dégradation dite d'Hofmann sur un (co)polymère base de base acrylamide incorporant, en son sein même, au moins un composé polyfonctionnel contenant au moins 3 hétéroatomes présentant chacun au moins un hydrogène mobile, en présence d'un hydroxyde d'alcalin et/ou d'alcalino-terreux (avantageusement l'hydroxyde de sodium), et d'un hypochlorite d'alcalin et/ou d'alcalino-terreux (avantageusement l'hypochlorite de sodium).

### La dégradation d'Hofmann

Cette réaction découverte par Hofmann à la fin du dix neuvième siècle, permet de passer d'un amide à une amine primaire possédant un atome de carbone en moins. Le mécanisme réactionnel est détaillé ci-dessous.

En présence d'une base (soude), un proton est arraché à l'amide.

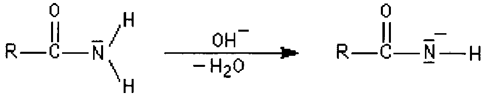

L'ion amidate formé réagit alors avec le chlore actif (Cl₂) de l'hypochlorite (e.g. : NaClO qui est en équilibre : 2 NaOH + Cl₂ ⇔ NaClO + NaCl + H₂O) pour donner un N-chloramide. La base (NaOH) arrache un proton du chloramide pour former un anion. L'anion perd un ion chlorure pour former un nitrène qui subit une transposition en isocyanate.

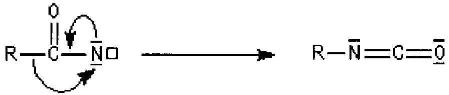

Par réaction entre l'ion hydroxyde et l'isocyanate, un carbamate est formé.

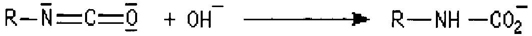

Après décarboxylation (élimination de CO₂) à partir du carbamate, on obtient une amine primaire

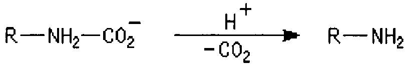

Pour la conversion de tout ou partie des fonctions amide d'un (co)polymère d'acrylamide en fonction amine, 2 facteurs principaux interviennent (exprimés en rapports molaires). Il s'agit de : - Alpha = (hypohalogénure d'alcalin et/ou alcalino terreux / acrylamide) et - Beta = (hydroxyde d'alcalin et/ou alcalino terreux / hypohalogénure d'alcalin et/ou alcalino terreux).

Les polymères obtenus par réaction de dégradation d'Hofmann sont notamment utilisés dans les procédés de fabrication de papier. De manière générale, on sait que pour être efficace comme agents de résistance, les (co)polymères mis en oeuvre doivent être sous une forme la plus cationique possible et donc présenter un degré de dégradation élevé. En effet, en fonction du degré Alpha de dégradation, il est possible de générer des variations de cationicité liées à la quantité de fonctions amine produites sur le squelette carboné du (co)polymère. Par ailleurs, on sait que lorsque le produit obtenu par réaction de dégradation d'Hofmann est amphotère, celui-ci peut également être utilisé pour améliorer la rétention de charges lors du procédé de fabrication du papier ou carton, tout en maintenant les performances de résistance à sec.

Jusqu'à récemment, seuls des procédés très lourds mettant en oeuvre, in situ, une unité de fabrication de produit de dégradation d'Hofmann (EP 377313) ou des procédés mettant en oeuvre un autre polymère (base de type (co)polymère de N-vinylformamide suivie d'une hydrolyse) lui-même relativement coûteux (US 2004/118540), avaient été mis en place.

La première solution industrielle viable a été proposée début 2005 dans le document WO2006/075115A1 de la Demanderesse. Dans ce document, le produit de dégradation d'Hofmann revendiqué est un polymère organique produit à une concentration supérieure à 3,5% en poids et de préférence supérieure à 4,5%. Même si les performances de résistance à sec sont fortement améliorées, les polymères produits présentent un poids moléculaire très faible conférant au (co)polymère un intérêt très limité pour des applications telles que le drainage ou la floculation.

Les documents WO2008/107620A1 et WO2010/061082A1 de la Demanderesse avaient permis de résoudre en partie cette problématique de faibles performances en égouttage. Cependant, l'homme de métier ayant besoin de plus d'égouttage et de rétention devait faire face à un certain plafonnement des performances de ses produits.

Dans le document JP 61120807, un polyacrylamide est préparé par réaction de dégradation d'Hofmann sur un polymère, en présence de guanidinium. Le guanidinium réagit avec un composé intermédiaire de la dégradation d'Hofmann, un isocyanate. Le polymère obtenu dans ce document est donc un polymère modifié durant la dégradation d'Hofmann, avec modification d'un composé intermédiaire.

Le document WO2009/013423A2 de la Demanderesse décrit un (co)polymère dérivé d'acrylamide obtenu par réaction de dégradation d'Hofmann sur un (co)polymère base. Le (co)polymère est ensuite ramifié. Ce document divulgue aussi la possibilité d'ajouter certains additifs (polyamines, polyéthylène imines...) dans la solution de (co)polymère base, avant ou pendant la réaction de dégradation d'Hofmann. Il s'agit de l'ajout d'additifs susceptibles de réagir sur les fonctions isocyanates du polymère générées durant la dégradation du (co)polymère base.

Le problème que se propose de résoudre l'invention est donc de mettre au point une large gamme de polymères dont les propriétés d'égouttage et de rétention puissent être encore améliorées par rapport à l'invention précédente.

De par leurs propriétés intrinsèques (stabilisation, cationisation, complexation...) les polymères de l'invention peuvent également avoir un intérêt dans des applications très diverses, on citera de façon non limitative : le traitement des eaux (potables ou usées), les techniques de coagulation / floculation, l'industrie minière, l'industrie des cosmétiques et de la détergence, l'industrie textile...

### Description de l'invention

La Demanderesse a mis au point des (co)polymères cationiques ou amphotères stables, obtenus par dégradation d'Hofmann d'un (co)polymère base à base acrylamide ou dérivés incorporant, en son sein même, au moins un composé polyfonctionnel contenant au moins 3 hétéroatomes présentent chacun au moins un hydrogène mobile.

Les hétéroatomes peuvent être : N, S, O, P.

Les composés polyfonctionnels peuvent être : oligomères, polymères, chaînes carbonées comportant au moins trois atomes de carbone.

Dans cette famille de composés polyfonctionnels dit additionnels, on citera les polyethylèneimines (PEI), les polyamines (primaires et secondaires), les polyallyamines, les polythiols, les polyalcools, les polyamides epichlorhydrine (PAE), les polyamines amides (PAA)...

La Demanderesse a constaté que, de manière surprenante et inattendue, l'incorporation d'au moins un composé polyfonctionnel additionnel avant ou pendant la polymérisation du (co)polymère base Hofmann permet de conférer au polymère cationique ou amphotère final une amélioration des performances d'égouttage par rapport aux polymères d'Hofmann de l'art antérieur et par rapport aux produits existants sur base polyvinyl formamide hydrolysée.

Par polymère ou (co)polymère Hofmann, on entend tout polymère ou (co)polymère obtenu après la réaction de dégradation d'Hofmann sur un polymère base ou sur un (co)polymère base.

Par incorporation, nous entendons tout procédé visant à lier dans la chaîne polymérique un composé polyfonctionnel (via un proton mobile) susceptible d'être lié par la suite à une autre chaîne de polymère via un autre proton mobile. Sans vouloir émettre de quelconque théorie, il s'agirait-là d'une structuration de la base du polymère (ramification, étoile, réseau, etc...). Par DSR, on désigne Dry Strength Resistance, ou Résistance à sec.

En d'autres termes, l'invention a pour objet un papier, carton ou analogue contenant un (co)polymère cationique ou amphotère obtenu par réaction de dégradation dite d'Hofmann, en solution aqueuse, en présence d'un hydroxyde d'alcalino-terreux et/ou d'alcalin et d'un hypohalogénure d'alcalino-terreux et/ou d'alcalin, sur un (co)polymère base comprenant au moins un monomère non ionique choisi dans le groupe comprenant l'acrylamide (et/ou le méthacrylamide), le N,N diméthylacrylamide, caractérisé en ce que le (co)polymère base est préalablement modifié avec au moins un composé polyfonctionnel additionnel. Ledit composé polyfonctionnel additionnel est avantageusement choisi dans le groupe comprenant polyéthylèneimine, polyamine (primaire ou secondaire), polyallylamine, polythiols, polyalcools, polyamides epichlorhydrine (PAE), polyamines amides (PAA)...

Le composé polyfonctionnel additionnel contient au moins 3 hétéroatomes choisis parmi N, S, O, P et présentant chacun au moins un hydrogène mobile.

L'invention concerne notamment les produits de dégradation d'Hofmann sur un (co)polymère base comprenant :
- au moins un monomère non ionique choisi dans le groupe comprenant l'acrylamide (et/ou le méthacrylamide), le N, N diméthylacrylamide,
- la modification du (co)polymère base avec au moins un composé polyfonctionnel additionnel, ladite modification consistant soit à incorporer le(s) composé(s) polyfonctionnel(s) additionnel(s) avant ou pendant la polymérisation des co-monomères constitutifs du (co)polymère base, soit à greffer le(s) composé(s) polyfonctionnel(s) additionnel(s) sur le (co)polymère base.

Notamment grâce à la modification du (co)polymère base préalablement à la dégradation d'Hofmann, la présente invention permet ainsi d'atteindre de façon surprenante un niveau de performances inégalé jusqu'alors par des (co)polymères issus de la dégradation d'Hofmann, en particulier dans l'application papetière et notamment en terme de drainage, d'égouttage et/ou de rétention.

En pratique, la modification est effectuée (1) par incorporation d'au moins un composé polyfonctionnel avant ou pendant la réaction de polymérisation, ou (2) par greffage d'au moins un composé polyfonctionnel sur le (co)polymère base. La dégradation d'Hofmann est ensuite réalisée sur ce (co)polymère base préalablement modifié.

Dans un mode préférentiel, le composé polyfonctionnel incorporé est la polyéthylèneimine (PEI). De manière tout aussi avantageuse, le composé polyfonctionnel incorporé est la polyamine amide (PAA).

En pratique, le (co)polymère obtenu à l'issue de la réaction d'Hofmann pourra être ramifié, lorsque le (co)polymère base aura été préalablement ramifié. En d'autres termes, c'est le caractère ramifié du (co)polymère base qui confèrera son état ramifié au (co)polymère final.

Dans un mode de réalisation préféré, le (co)polymère est obtenu par réaction de dégradation dite d'Hofmann en présence, en tant qu'hypohalogénure, d'un hypochlorite d'alcalin, avantageusement l'hypochlorite de sodium.

Selon une autre caractéristique, le coefficient Alpha hypohalogénure/monomère non ionique utilisé pour la préparation des polymères mis en oeuvre dans l'invention est supérieur à 0,1, voire à 0,3, avantageusement supérieur à 0,5 et de préférence inférieur à 1.

Le (co)polymère mis en oeuvre dans l'invention peut être utilisé avec succès pour la fabrication de papiers et cartons d'emballage, de papiers supports de couchage, de tout type de papiers, cartons ou analogues nécessitant l'utilisation d'un polymère cationique comme agent de coagulation et/ou rétention et/ou promoteur de charge cationique.

Les (co)polymères cationiques ou amphotères d'acrylamide de l'invention permettent, en particulier, un gain significatif en productivité des machines à papier sur lesquelles ces polymères seraient utilisés. Ils permettent par ailleurs d'obtenir de bonnes propriétés d'égouttage et une résistance à l'éclatement et à la traction très élevée et ceci, sans effet secondaire négatif.

Selon une autre caractéristique, le produit de dégradation d'Hofmann est produit à une concentration supérieure à 4% en poids, de préférence supérieure à 7%, avantageusement supérieure à 8% et présente avantageusement une viscosité supérieure à 30 cps (à une concentration de 9%, à 25°C, Brookfield LV1, 60 rpm), de préférence supérieure à 40 cps. Ces concentrations concernent la concentration du produit de dégradation d'Hofmann. De manière générale, elles se distinguent des concentrations du (co)polymère base avant la réaction de dégradation d'Hofmann et de la concentration d'utilisation du (co)polymère obtenu après la dégradation d'Hofmann.

De même, le (co)polymère de l'invention a une densité de charge cationique de préférence supérieure à 2 meq/g et avantageusement supérieure à 5 meq/g.

### Le (co)polymère cationique ou amphotère dérivé d'acrylamide

Il est obtenu par réaction de dégradation d'Hofmann sur un (co)polymère base.

Le (co)polymère " base "

En pratique, le (co)polymère base utilisé contient :
- au moins 5 moles % d'un monomère non ionique choisi dans le groupe comprenant l'acrylamide (et/ou le méthacrylamide), le N, N diméthylacrylamide, préférentiellement l'acrylamide,
- au moins 1000 ppm d'au moins un composé polyfonctionnel additionnel choisi dans le groupe comprenant polyéthylèneimine, polyamine (primaire ou secondaire), polyallylamine, polythiols, les polyalcools, polyamides epichlorhydrine (PAE), polyamines amides (PAA) avantageusement polyethylèneimine,
- optionnellement au moins :
   ∘ un monomère éthylénique cationique non saturé, choisi préférentiellement dans le groupe comprenant les monomères de type dialkylaminoalkyl (meth)acrylamide, diallylamine, methyldiallylamine et leurs sel d'ammonium quaternaire ou d'acides. On citera en particulier le chlorure de dimethyldiallylammonium (DADMAC), le chlorure d'acrylamidopropyltrimethylammonium (APTAC) et/ou le chlorure de methacrylamidopropyltrimethylammonium (MAPTAC),
   ∘ et/ou un monomère non ionique choisi préférentiellement dans le groupe comprenant le N-vinyl acetamide, N-vinyl formamide, la N-vinylpyrrolidone et/ou le vinyl acétate,
   ∘ et/ou un monomère anionique de type acide ou anhydride choisi dans le groupe comprenant l'acide (méth)acrylique, l'acide acrylamidomethylpropyl sulfonique, l'acide itaconique, l'anhydride maléique, l'acide maléique, l'acide méthallyl sulfonique, l'acide vinylsulfonique et leurs sels.

Avantageusement, le (co)polymère base est ramifié et constitué de préférence :
- d'acrylamide
- de polyéthylèneimine
- et d'au moins un co-monomère éthylénique cationique non saturé, choisi dans le groupe comprenant les monomères de type dialkylaminoalkyl (meth)acrylamide, diallylamine, methyldiallylamine et leurs sel d'ammonium quaternaire ou d'acides, de préférence le chlorure de dimethyldiallylammonium.

Il est important de noter que, en association avec ces monomères, il est également possible d'utiliser des monomères insolubles dans l'eau tels que les monomères acryliques, allyliques ou vinyliques comportant un groupement hydrophobe. Lors de leur utilisation, ces monomères seront employés dans des quantités très faibles, inférieures à 10 moles%, de préférence inférieures à 5 moles%, voire inférieur à 1% et ils seront choisis préférentiellement dans le groupe comprenant les dérivés de l'acrylamide comme les N-alkylacrylamide par exemple le N-tert-butylacrylamide, l'octylacrylamide ainsi que les N,N-dialkylacrylamides comme le N,N-dihexylacrylamide...les dérivés d'acide acrylique comme les alkyl acrylates et méthacrylates...

Selon une caractéristique préférée de l'invention, le (co)polymère base pourra être ramifié.

On pourra effectuer la ramification de préférence durant (ou éventuellement après) la polymérisation du (co)polymère " base ", en présence d'un agent ramifiant polyfonctionnel et éventuellement d'un agent de transfert. On trouvera ci dessous une liste non limitative des ramifiants : méthylène bisacrylamide (MBA), l'ethylene glycol di-acrylate, le polyethylene glycol dimethacrylate, le diacrylamide, le cyanomethylacrylate, le vinyloxyethylacrylate ou methacrylate, la triallylamine, le formaldehyde, le glyoxal, les composés de type glycidyléther comme l'éthylèneglycol di glycidyléther, ou des époxy ou tout autre moyen bien connu de l'homme de métier permettant la réticulation.

En pratique, l'agent de ramification est introduit avantageusement à raison de cinq à cinquante milles (5 à 50000) parties par million en poids par rapport à la matière active, de préférence 5 à 10000, avantageusement de 5 à 5000. Avantageusement, l'agent de ramification est le méthylène bis acrylamide (MBA).

L'incorporation du composé polyfonctionnel additionnel au sein du (co)polymère base pourra se faire dans le milieu réactionnel avant ou en cours de polymérisation, ou par tout autre méthode de greffage sur le (co)polymère base.

De façon préférentielle, le composé polyfonctionnel additionnel sera mélangé à un comonomère avant polymérisation.

On trouvera ci dessous une liste non limitative des agents de transfert : alcool isopropylique, hypophosphite de sodium, mercaptoethanol, etc...

L'homme de métier saura choisir la meilleure combinaison en fonction de ses connaissances propres, de la présente description, ainsi que des exemples qui vont suivre.

Le (co)polymère servant de base à la réaction de dégradation d'Hofmann ne nécessite pas le développement de procédé de polymérisation particulier. Les principales techniques de polymérisation, bien connues par l'homme de métier et pouvant être utilisées sont : la polymérisation par précipitation, la polymérisation en émulsion (aqueuse ou inverse) suivie ou non d'une étape de distillation et/ou de spray drying, et la polymérisation en suspension ou la polymérisation en solution, ces deux techniques étant préférées.

Il est également possible d'ajouter dans la solution de (co)polymère base, avant ou pendant la réaction de dégradation d'Hofmann certains additifs qui sont susceptibles de réagir sur les fonctions isocyanates du polymère générées en cours de dégradation. De manière générale, il s'agit de molécules portant des fonctions chimiques nucléophiles telles que des fonctions hydroxyle, aminé... A titre d'exemples, les additifs en question peuvent donc être de la famille : des alcools, des polyols (e.g.: amidon), des polyamines, des polyéthylène imines...

L'incorporation de sels d'ions cationiques polyvalents, comme mentionnée dans la demande de brevet de la Demanderesse WO2010/061082A1, peut aussi être réalisée dans le but d'augmenter la stabilité de produits présentant un coefficient Alpha inférieur à 1.

La réaction de dégradation d'Hofmann sur le copolymère " base "

La réaction d'Hofmann nécessite la conversion des fonctions amide en fonction aminée en faisant intervenir 2 facteurs principaux (exprimés en rapports molaires) :
- Alpha = (hypochlorite d'alcalin et/ou d'alcalino-terreux/ (meth)acrylamide)
- Beta = (hydroxyde d'alcalin et/ou alcalino-terreux / hypochlorite d'alcalin et/ou d'alcalino-terreux)

A partir d'une solution de (co)polymère " base " précédemment décrit de concentration comprise entre 5 et 40% en poids, de préférence entre 10 et 25%, on détermine la quantité molaire de fonction (meth)acrylamide totale. On choisit alors le niveau de dégradation Alpha souhaité (qui correspond au degré de fonction amine voulue), qui permet de déterminer la quantité sèche d'hypohalogénure d'alcalin et/ou d'alcalino-terreux et ensuite le coefficient béta, qui permet de déterminer la quantité sèche d'hydroxyde d'alcalin et/ou alcalino-terreux.

On prépare alors une solution d'hypohalogénure et d'hydroxyde d'alcalin et/ou alcalino-terreux à partir des rapports alpha et béta. Selon l'invention, les réactifs préférablement utilisés sont l'hypochlorite de sodium (eau de javel) et la soude (hydroxyde de sodium).

Afin de stabiliser les fonctions aminées qui vont être produites, on peut éventuellement rajouter, dans le réacteur contenant le (co)polymère base, un (ou éventuellement plusieurs) dérivé d'ammonium quaternaire tel que cela est décrit dans le document JP 57077398 et bien connu par l'homme de métier, celui-ci a en effet pour but d'éviter la réaction entre les fonctions amine et les fonctions amides résiduelles. On notera, de plus, que l'ajout de ces agents peut être effectué en séparé, en simultané, en mélange ou non, dans un ordre quelconque d'introduction et en un ou plusieurs points d'injection.

L'augmentation en cationicité du (co)polymère base s'effectue lors de la dégradation dite d'Hofmann, par l'utilisation, en totalité ou non, d'un hypohalogénure d'alcalin ou d'alcalino-terreux.

De plus, il est également possible de proposer des (co)polymères cationiques ou amphotères d'acrylamide de l'invention obtenus par réaction de dégradation dite d'Hofmann sous la forme d'un mélange avec un ou plusieurs autre(s) polymère(s) synthétique(s) ou naturel.

De même, bien que préparés en solution, les polymères de l'invention peuvent également être proposés sous forme solide. Dans ces conditions, la forme solide contient non seulement le (co)polymère, mais également une proportion de sel obtenue à l'issue de la réaction de dégradation d'Hofmann. En pratique, ils sont obtenus entre autres par des procédés consistant à sécher la solution précédemment citée. Les principales techniques d'isolation alors utilisées sont celles du séchage par atomisation ou pulvérisation (qui consiste à créer un nuage de fines gouttelettes dans un courant gazeux chaud pendant une durée contrôlée), du séchage à tambour, des sécheurs à lit fluidisé...

Le (co)polymère décrit-ci avant est utilisé en tant qu'agent de floculation, rétention et/ou drainage, et résistance à sec dans un procédé de fabrication de papier.

La présente invention concerne également un papier, carton ou analogue obtenu par un procédé de fabrication de papier, carton, ou analogue mettant en oeuvre comme agent de floculation, rétention et/ou drainage, et résistance à sec, un (co)polymère cationique ou amphotère obtenu par réaction de dégradation dite d'Hofmann, en solution aqueuse, en présence d'un hydroxyde d'alcalino-terreux et/ou d'alcalin et d'un hypohalogénure d'alcalino-terreux et/ou d'alcalin, sur un (co)polymère base comprenant au moins un monomère non ionique choisi dans le groupe comprenant l'acrylamide (et/ou le méthacrylamide), le N,N diméthylacrylamide, caractérisé en ce que le (co)polymère base est préalablement modifié avec au moins un composé polyfonctionnel contenant au moins 3 hétéroatomes choisis parmi N, S, O, P et présentant chacun au moins un hydrogène mobile.

L'invention et les avantages qui en découlent ressort bien des exemples de réalisation suivants.

### Exemples

### Les (co)polymères cationiques dérivés d'acrylamide

### Polymère A :

Le polymère cationique A est obtenu par une réaction de dégradation d'Hofmann, conformément à l'exemple 1 de la demande de brevet de la Demanderesse WO2010/061082 A1, sur un (co)polymère base (20% en matière active) d'acrylamide (70% molaire) et de chlorure de dimethyldiallyl ammonium (DADMAC) (30% molaire) ramifié (MBA : 600 ppm / matière active).

Pour réaliser cette base, le monomère de DADMAC ainsi que le MBA sont placés dans le réacteur. L'acrylamide sera incorporée en coulée continu pendant 2h, dans un milieu réactionnel maintenu à 85°C. La catalyse se fera au SPS (Persulfate de sodium) et au MBS (méthabisulfite de sodium), catalyseurs bien connus de l'homme de métier.

Une fois la dégradation d'Hofmann effectuée, le produit final présente une viscosité de 51 cps (25°C, Brookfield LV1, 60 rpm) pour une concentration de 8,5%.

Ce polymère représente l'art antérieur.

### Polymère B :

Le polymère cationique B est obtenu par une réaction de dégradation d'Hofmann sur un (co)polymère base (20% en matière active) d'acrylamide (70% molaire) et de chlorure de dimethyldiallyl ammonium (DADMAC) (30% molaire) ramifié (MBA : 600 ppm / matière active) modifié au pentaerythritol, à hauteur de 1000ppm par rapport à la matière active.

Pour ce faire, le pentaerythritol est mélangé au monomère de DADMAC et au MBA dans le réacteur.

L'acrylamide sera incorporée en coulée continu pendant 2h, dans un milieu réactionnel maintenu à 85°C. La catalyse se fera au SPS et au MBS, catalyseurs bien connus de l'homme de métier.

La dégradation Hofmann en elle-même se déroule de la même manière que dans l'exemple 1 de la demande de brevet de la Demanderesse WO2010/061082A1. Le (co)polymère cationique dérivé d'acrylamide ainsi réalisé présente une viscosité bulk de 48 cps (25°C, Brookfield LV1, 60 rpm) et une concentration de 9,21 %.

### Polymère C :

Le polymère cationique C est obtenu par une réaction de dégradation d'Hofmann sur un (co)polymère base (20% en matière active) d'acrylamide (70% molaire) et de chlorure de dimethyldiallyl ammonium (DADMAC) (30% molaire) ramifié (MBA : 600 ppm / matière active) modifié avec un polymère de polyamine secondaire (de type FL3930 de SNF), à hauteur de 4% en poids par rapport à la matière active.

Pour ce faire, la polyamine est mélangée au monomère de DADMAC et au MBA dans le réacteur.

L'acrylamide sera incorporée en coulée continu pendant 2h, dans un milieu réactionnel maintenu à 85°C. La catalyse se fera au SPS et au MBS, catalyseurs bien connus de l'homme de métier.

La dégradation Hofmann en elle-même se déroule de la même manière que dans l'exemple 1 de la demande de brevet de la Demanderesse WO2010/061082 A1. Le (co)polymère cationique dérivé d'acrylamide ainsi réalisé présente une viscosité bulk de 50 cps (25°C, Brookfield LV1, 60 rpm) et une concentration de 8,3%.

### Polymère D :

Le polymère cationique D est obtenu par une réaction de dégradation d'Hofmann sur un (co)polymère base (20% en matière active) d'acrylamide (70% molaire) et de chlorure de dimethyldiallyl ammonium (DADMAC) (30% molaire) ramifié (MBA : 600 ppm / matière active) modifié avec un polymère de polyamineamide (de type Retaminol CO1 de Kemira), à hauteur de 2,5% en poids par rapport à la matière active.

Pour ce faire, la PAA est mélangée au monomère de DADMAC et au MBA dans le réacteur. L'acrylamide sera incorporée en coulée continu pendant 2h, dans un milieu réactionnel maintenu à 85°C. La catalyse se fera au SPS et au MBS, catalyseurs bien connus de l'homme de métier.

La dégradation Hofmann en elle-même se déroule de la même manière que dans l'exemple 1 de la demande de brevet de la Demanderesse WO/2010/061082 A1. Le (co)polymère cationique dérivé d'acrylamide ainsi réalisé présente une viscosité bulk de 64 cps (25°C, Brookfield LV1, 60 rpm) et une concentration de 8,34%.

### Polymère E :

Le polymère cationique E est obtenu par une réaction de dégradation d'Hofmann sur un (co)polymère base (20% en matière active) d'acrylamide (70% molaire) et de chlorure de dimethyldiallyl ammonium (DADMAC) (30% molaire) ramifié (MBA : 600 ppm / matière active) modifié avec un polymère de polyéthylèneimine (de type Polymin HM de BASF), à hauteur de 5% en poids par rapport à la matière active.

Pour ce faire, la polyéthylèneimine est mélangée au monomère de DADMAC et au MBA dans le réacteur.

L'acrylamide sera incorporée en coulée continu pendant 2h, dans un milieu réactionnel maintenu à 85°C. La catalyse se fera au SPS et au MBS, catalyseurs bien connus de l'homme de métier.

La dégradation Hofmann en elle-même se déroule de la même manière que dans l'exemple 1 de la demande de brevet de la Demanderesse WO2010/061082A1. Le (co)polymère cationique dérivé d'acrylamide ainsi réalisé présente une viscosité bulk de 72 cps (25°C, Brookfield LV1, 60 rpm) et une concentration de 8,5%.

### Polymère F :

Le polymère cationique F est obtenu par une réaction de dégradation d'Hofmann sur un (co)polymère base (20% en matière active) d'acrylamide (70% molaire) et de chlorure de dimethyldiallyl ammonium (DADMAC) (30% molaire) ramifié (MBA : 600 ppm / matière active) modifié avec un polymère de polyéthylèneimine (de type Polymin HM de BASF), à hauteur de 0,8% en poids par rapport à la matière active.

Pour ce faire, la polyéthylèneimine est mélangée au monomère de DADMAC et au MBA dans le réacteur.

L'acrylamide sera incorporée en coulée continu pendant 2h, dans un milieu réactionnel maintenu à 85°C. La catalyse se fera au SPS et au MBS, catalyseurs bien connus de l'homme de métier.

La dégradation Hofmann en elle-même se déroule de la même manière que dans l'exemple 1 de la demande de brevet de la Demanderesse WO2010/061082 A1. Le (co)polymère cationique dérivé d'acrylamide ainsi réalisé présente une viscosité bulk de 65 cps (25°C, Brookfield LV1, 60 rpm) et une concentration de 8,4%.

### RSL HF70D :

Le produit RSL HF70D, référence SNF, est obtenu par une réaction de dégradation d'Hofmann alpha=1 sur un (co)polymère base (25% en matière active) d'acrylamide (70% molaire) et de chlorure de dimethyldiallyl ammonium (DADMAC) (30% molaire). Le (co)polymère cationique dérivé d'acrylamide ainsi réalisé présente une viscosité bulk de 20 cps (25°C, Brookfield LV1, 60 rpm) et une concentration de 9%.

### Mélange 1 :

Le mélange 1 est obtenu par mélange du polymère A, décrit ci-dessus, avec de la Polymin HM dans un ratio tel que la Polymin HM représente 5% en poids de la matière active totale. Ce mélange a une viscosité de 62 cps (25°C, Brookfield LV1, 60 rpm) pour une concentration de 8,6%.

### Mélange 2 :

Le mélange 2 est obtenu par mélange du RSL HF70D avec de la Polymin HM dans un ratio tel que la Polymin HM représente 5% en poids de la matière active totale. Ce mélange a une viscosité de 29 cps (25°C, Brookfield LV1, 60 rpm) pour une concentration de 9,2%.

Le produit concurrent pris en référence est le Luredur PR 8097 de BASF, une polyN-Vinyl Formamide, hydrolysée à 50% en vinylamine, de haut poids moléculaire.

### Test des propriétés des polymères

### A/ Performances d'égouttage

Séquence CSF à 1000 rpm (tours par minute), le CSF étant une mesure du degré d'égouttabilité de la pâte (norme TAPPI T 2270 M-94) :
Utilisation d'une formette statique pour réaliser l'agitation de la pâte. Introduction de 1 litre de pâte de carton recyclé à 0,3 %.
T=0s : mise en agitation de la pâte
T=10s : ajout du polymère
T=30s : arrêt de l'agitation et récupération du litre de pâte.
Réalisation du test TAPPI T 227OM-94.

Les polymères seront injectés à des dosages typiques pour une machine à papier : 800g/tonne, 1kg/tonne et 1,2 kg/tonne.

### a) Performances par rapport à l'art antérieur Hofmann à des dosages standards :

| Polymère | Dosage Cationique (kg/tonne) | % Amélioration en CSF |
|---|---|---|
| Blanc | 0 | 0 |
| Polymère A | 0,8 | 14 |
| Polymère B | 0,8 | 18 |
| Polymère C | 0,8 | 18 |
| Polymère D | 0,8 | 19 |
| Polymère E | 0,8 | 20 |
| Polymère F | 0,8 | 19 |
| RSL HF70D | 0,8 | 5 |
| Mélange 1 | 0,8 | 14 |
| Mélange 2 | 0,8 | 6 |
| Luredur PR 8097 | 0,8 | 12 |

| Polymère | Dosage Cationique (kg/tonne) | % Amélioration en CSF |
|---|---|---|
| Blanc | 0 | 0 |
| Polymère A | 1 | 27 |
| Polymère B | 1 | 30 |
| Polymère C | 1 | 32 |
| Polymère D | 1 | 32 |
| Polymère E | 1 | 34 |
| Polymère F | 1 | 34 |
| RSL HF70D | 1 | 7 |
| Mélange 1 | 1 | 28 |
| Mélange 2 | 1 | 8 |
| Luredur PR 8097 | 1 | 24 |

| Polymère | Dosage Cationique (kg/tonne) | % Amélioration en CSF |
|---|---|---|
| Blanc | 0 | 0 |
| Polymère A | 1,2 | 40 |
| Polymère B | 1,2 | 42 |
| Polymère C | 1,2 | 43 |
| Polymère D | 1,2 | 42 |
| Polymère E | 1,2 | 45 |
| Polymère F | 1,2 | 44 |
| RSL HF70D | 1,2 | 12 |
| Mélange 1 | 1,2 | 41 |
| Mélange 2 | 1,2 | 13 |
| Luredur PR 8097 | 1,2 | 40 |

Pour chacune de ces analyses, les valeurs les plus élevées correspondent aux meilleures performances.

Nous pouvons clairement voir qu'à des dosages normalement appliqués en papèterie (entre 800g et 1,2 kg/tonne), les polymères B,C,D, E et F présentent de meilleurs résultats que les polymères de l'art antérieur. Ils permettent également de maintenir des performances intéressantes voire améliorées par rapport à une référence du marché, le Luredur PR 8097, et ce, à des coûts de traitement inférieurs, compte tenu du plus faible coût en matière première. Par ailleurs, nous pouvons observer dans ces exemples, une synergie de la PEI quand celle-ci est incluse dans le squelette du (co)polymère base, par rapport à la PEI mélangée au final à un produit issu de la dégradation d'Hofmann, qui ne conduit à aucune amélioration.

### b) Performances à des dosages plus élevés:

| Polymère | Dosage Cationique (kg/tonne) | % Amélioration en CSF |
|---|---|---|
| Blanc | 0 | 0 |
| Polymère A | 1,5 | 59 |
| Polymère E | 1,5 | 63 |
| Polymère A | 2 | 60 |
| Polymère E | 2 | 74 |

Nous pouvons observer que par rapport à l'art antérieur, le polymère E ne présente pas le même point de saturation à 1,5kg/tonne, ce qui confère à l'homme de métier un plus grand spectre d'égouttage accessible.

### B/ Performances en application DSR (résistance à sec), grammage à 60g/m2

Le test : Les formettes de papier sont réalisées avec une formette dynamique automatique. Tout d'abord, la pâte à papier est préparée en désintégrant pendant 30 minutes 90 grammes de fibres kraft vierges dans 2 litres d'eau chaude. La pâte obtenue est ensuite diluée jusqu'à un volume total de 9 litres. Une fois la consistance mesurée précisément, la quantité nécessaire de cette pâte est prélevée de manière à obtenir au final une feuille avec un grammage de 60g/m2.

La pâte est alors introduite dans le cuvier de la formette dynamique, diluée jusqu'à une consistance de 0,32% et agitée modérément avec un agitateur mécanique afin d'homogénéiser la suspension fibreuse.

En mode manuel, la pâte est pompée jusqu'au niveau de la buse afin d'amorcer le circuit. Un buvard et la toile de formation sont placés dans le bol de la formette dynamique avant de démarrer la rotation du bol à 900m/min et de construire le mur d'eau. Les différents agents de résistance à sec sont alors introduits dans la suspension fibreuse agitée avec un temps de contact de 30 secondes pour chaque polymère. La feuille est alors réalisée (en mode automatique) par 22 aller-retour de la buse projetant la pâte dans le mur d'eau. Une fois que l'eau est drainée et que la séquence automatique est terminée, la toile de formation avec le réseau de fibres formé est retirée du bol de la formette dynamique et placée sur une table. Un buvard sec est déposé du côté du matelas de fibres humides et est pressé une fois avec un rouleau. L'ensemble est retourné et la toile est délicatement séparée du matelas fibreux. Un second buvard sec est déposé et la feuille (entre les deux buvards) est pressée une fois sous une presse délivrant 4 bars puis est séchée sur un sécheur tendu pendant 9 min à 107<0>C. Les deux buvards sont ensuite retirés et la feuille est stockée pendant une nuit dans une pièce à humidité et température contrôlées (50% d'humidité relative et 23 <0>C). Les propriétés de résistance à sec et humide de toutes les feuilles obtenues par cette procédure sont alors évaluées.

L'éclatement (Burst index) est mesuré avec un éclatomètre Messmer Buchel M 405 (moyenne sur 14 mesures).

La traction à sec est mesurée dans le sens machine avec un appareil de traction Testometric AX (moyenne sur 5 échantillons).

Dans tous les exemples qui suivent, et sauf indication contraire, les feuilles de papier sont réalisées selon la procédure ci-dessus en introduisant en premier l'agent de résistance à sec cationique (le produit de dégradation d'Hofmann) à un dosage de 1,5 kg/T (polymère sec / fibre sèche) puis la résine anionique à un dosage de 1,5 kg/T (polymère sec / fibre sèche).

Les tests sont réalisés avec une pâte à pH neutre.

### La résine anionique (A-)

La résine anionique utilisée lors des tests est un (co)polymère acrylamide et acrylate de sodium (70/30 en moles%) obtenue par polymérisation en solution à 15% et présentant une viscosité Bulk de 2500 cps.

| | Dosage Alum (kg/tonne) | Dosage Cationique (kg/tonne) | Dosage Anionique (kg/tonne) | % augmentation en traction à sec | % augmentation du Burst Index | First Pass Retention en % |
|---|---|---|---|---|---|---|
| Blanc | 0 | 0 | 0 | 0 | 0 | 78,7 |
| Polymère A | 2,5 | 1,5 | 1,5 | 32,7 | 48,7 | 82,3 |
| Polymère E | 2,5 | 1,5 | 1,5 | 32,2 | 47,9 | 83 |
| Luredur PR 8097 | 2,5 | 1,5 | 1,5 | 32,6 | 48,1 | 81,9 |

Par alum, nous entendons le composé Al₂(SO₄)₃ qui est couramment utilisé comme coagulant dans la fabrication du papier.

**Commentaires des résultats:** Le polymère E, présente un égouttage amélioré par rapport au polymère A tout en conservant de bonnes performances de résistance à sec. Il présente en outre des performances DSR similaires au Luredur PR 8097. En outre, nous observons que le polymère E contribue à une amélioration de la rétention.

## Revendications

1. Papier, carton ou analogue contenant un (co)polymère cationique ou amphotère obtenu par réaction de dégradation dite d'Hofmann, en solution aqueuse, en présence d'un hydroxyde d'alcalino-terreux et/ou d'alcalin et d'un hypohalogénure d'alcalino-terreux et/ou d'alcalin, sur un (co)polymère base comprenant au moins un monomère non ionique choisi dans le groupe comprenant l'acrylamide (et/ou le méthacrylamide), le N,N diméthylacrylamide, ***caractérisé*** en ce le (co)polymère base est préalablement modifié avec au moins un composé polyfonctionnel contenant au moins 3 hétéroatomes choisis parmi N, S, O, P et présentant chacun au moins un hydrogène mobile.

2. Papier, carton ou analogue obtenu par un procédé de fabrication de papier, carton, ou analogue mettant en oeuvre comme agent de floculation, rétention et/ou drainage, et résistance à sec, un (co)polymère cationique ou amphotère obtenu par réaction de dégradation dite d'Hofmann, en solution aqueuse, en présence d'un hydroxyde d'alcalino-terreux et/ou d'alcalin et d'un hypohalogénure d'alcalino-terreux et/ou d'alcalin, sur un (co)polymère base comprenant au moins un monomère non ionique choisi dans le groupe comprenant l'acrylamide (et/ou le méthacrylamide), le N,N diméthylacrylamide, ***caractérisé* en ce que** le (co)polymère base est préalablement modifié avec au moins un composé polyfonctionnel contenant au moins 3 hétéroatomes choisis parmi N, S, O, P et présentant chacun au moins un hydrogène mobile.

3. Papier, carton ou analogue selon la revendication 1 ou 2, **caractérisé en ce que** le composé polyfonctionnel est choisi dans le groupe comprenant les polyéthylèneimine, polyamine (primaire ou secondaire), polyallylamine, polythiols, polyalcools, polyamides epichloridrine, polyamines amides.

4. Papier, carton ou analogue selon la revendication 1 ou 2, **caractérisé en ce que** le composé polyfonctionnel est la polyéthylèneimine.

5. Papier, carton ou analogue selon la revendication 1 ou 2, **caractérisé en ce que** le composé polyfonctionnel est la polyamine amide.

6. Papier, carton ou analogue selon la revendication 1 ou 2, **caractérisé en ce que** le (co)polymère base est modifié par incorporation du composé polyfonctionnel avant ou pendant la polymérisation des co-monomères.

7. Papier, carton ou analogue selon la revendication 1 ou 2, **caractérisé en ce que** le (co)polymère base contient au moins 5 moles % de monomère non ionique et au moins 1000 ppmd'un composé polyfonctionnel.

8. Papier, carton ou analogue selon la revendication 1 ou 2, **caractérisé en ce que** le (co)polymère base contient en outre au moins :
∘ un monomère éthylénique cationique non saturé, choisi préférentiellement dans le groupe comprenant les monomères de type dialkylaminoalkyl (meth)acrylamide, diallylamine, methyldiallylamine et leurs sel d'ammonium quaternaire ou d'acides, et en particulier le chlorure de dimethyldiallylammonium (DADMAC), le chlorure d'acrylamidopropyltrimethylammonium (APTAC) et/ou le chlorure de methacrylamidopropyltrimethylammonium (MAPTAC)
∘ et/ou un monomère non ionique choisi préférentiellement dans le groupe comprenant le N-vinyl acetamide, N-vinyl formamide, la N-vinylpyrrolidone et/ou le vinyl acétate,
∘ et/ou un monomère anionique de type acide ou anhydride choisi dans le groupe comprenant l'acide (méth)acrylique, l'acide acrylamidomethylpropyl sulfonique, l'acide itaconique, l'anhydride maléique, l'acide maléique, l'acide méthallyl sulfonique, l'acide vinylsulfonique et leurs sels.

9. Papier, carton ou analogue selon la revendication 1 ou 2, **caractérisé en ce que** le (co)polymère base est constitué :
- d'acrylamide
- de polyéthylèneimine
- et d'au moins un co-monomère éthylénique cationique non saturé, choisi dans le groupe comprenant les monomères de type dialkylaminoalkyl (meth)acrylamide, diallylamine, methyldiallylamine et leurs sel d'ammonium quaternaire ou d'acides, de préférence le chlorure de dimethyldiallylammonium.

10. Papier, carton ou analogue selon la revendication 1 ou 2, **caractérisé en ce que** le (co)polymère base est ramifié.

11. Papier, carton ou analogue selon la revendication 1 ou 2, **caractérisé en ce que** le produit de dégradation d'Hofmann est produit à une concentration supérieure à 4% en poids, de préférence supérieure à 7%, avantageusement supérieure à 8%.

12. Papier, carton ou analogue selon la revendication 1 ou 2, **caractérisé en ce que** le (co)polymère base est modifié par greffage du composé polyfonctionnel après obtention du (co)polymère base final.

## Patentansprüche

1. Papier, Karton oder dergleichen, enthaltend ein kationisches oder amphoteres (Co)polymer, das durch eine Abbaureaktion, Hofmann-Abbaureaktion genannt, in wässriger Lösung im Beisein eines erdalkalischen und/oder alkalischen Hydroxids und eines erdalkalischen und/oder alkalischen Hypohalogenids an einem Basis(co)polymer erhalten wird, das mindestens ein nichtionisches Monomer umfasst, das aus der Gruppe ausgewählt ist, die Acrylamid (und/oder Methacrylamid), N,N-Dimethylacrylamid umfasst, **dadurch gekennzeichnet, dass** das Basis(co)polymer vorab mit mindestens einer polyfunktionellen Verbindung modifiziert wird, die mindestens drei Heteroatome enthält, die aus N, S, O, P ausgewählt sind und jeweils mindestens einen beweglichen Wasserstoff aufweisen.

2. Papier, Karton oder dergleichen, das bzw. der durch ein Herstellungsverfahren für Papier, Karton oder dergleichen erhalten ist, das als Flockungs-, Retentions- und/oder Entwässerungs-, und Trockenfestigkeitsmittel ein kationisches oder amphoteres (Co)polymer einsetzt, das durch eine Abbaureaktion, Hofmann-Abbaureaktion genannt, in wässriger Lösung im Beisein eines erdalkalischen und/oder alkalischen Hydroxids und eines erdalkalischen und/oder alkalischen Hypohalogenids an einem Basis(co)polymer erhalten wird, das mindestens ein nichtionisches Monomer umfasst, das aus der Gruppe ausgewählt ist, die Acrylamid (und/oder Methacrylamid), N,N-Dimethylacrylamid umfasst, **dadurch gekennzeichnet, dass** das Basis(co)polymer vorab mit mindestens einer polyfunktionellen Verbindung modifiziert wird, die mindestens drei Heteroatome enthält, die aus N, S, O, P ausgewählt sind und jeweils mindestens einen beweglichen Wasserstoff aufweisen.

3. Papier, Karton oder dergleichen nach Anspruch 1 oder 2, **dadurch gekennzeichnet, dass** die polyfunktionelle Verbindung aus der Gruppe ausgewählt ist, die Polyethylenimin, (primäres oder sekundäres) Polyamin, Polyallylamin, Polythiole, Polyalkohole, Epichlorhydrin-Polyamide, Polyaminamide umfasst.

4. Papier, Karton oder dergleichen nach Anspruch 1 oder 2, **dadurch gekennzeichnet, dass** die polyfunktionelle Verbindung Polyethylenimin ist.

5. Papier, Karton oder dergleichen nach Anspruch 1 oder 2, **dadurch gekennzeichnet, dass** die polyfunktionelle Verbindung Polyaminamid ist.

6. Papier, Karton oder dergleichen nach Anspruch 1 oder 2, **dadurch gekennzeichnet, dass** das Basis(co)polymer durch Einbringen der polyfunktionellen Verbindung vor oder während der Polymerisation der Comonomere modifiziert wird.

7. (Papier, Karton oder dergleichen nach Anspruch 1 oder 2, **dadurch gekennzeichnet, dass** das Basis(co)polymer mindestens 5 Mol-% nichtionisches Monomer und mindestens 1000 ppm einer polyfunktionellen Verbindung enthält.

8. Papier, Karton oder dergleichen nach Anspruch 1 oder 2, **dadurch gekennzeichnet, dass** das Basis(co)polymer darüber hinaus mindestens enthält:
∘ ein ethylenisch ungesättigtes kationisches Monomer, das vorzugsweise aus der Gruppe ausgewählt ist, die Monomere der Art Dialkylaminoalkyl(meth)acryhamid, Diallylamin, Methyldiallylamin und deren quaternäres Ammoniumsalz oder Säuresalz und insbesondere Diallyldimethylammoniumchlorid (DADMAC), Acrylamidopropyltrimethylammoniumchlorid (APTAC) und/oder Methacrylamidopropyltrimethylammoniumchlorid (MAPTAC) umfasst,
∘ und /oder ein nichtionisches Monomer, das vorzugsweise aus der Gruppe ausgewählt ist, die N-Vinylacetamid, N-Vinylformamid, N-Vinylpyrrolidon und/oder Vinylacetat umfasst,
∘ und/oder ein anionisches Monomer in Säure- oder Anhydridform, das aus der Gruppe ausgewählt ist, die (Meth)acrylsäure, Acrylamidmethylpropylsulfonsäure, Itaconsäure, Maleinsäureanhydrid, Maleinsäure, Methallylsulfonsäure, Vinylsulfonsäure und deren Salze umfasst.

9. Papier, Karton oder dergleichen nach Anspruch 1 oder 2, **dadurch gekennzeichnet, dass** das Basis(co)polymer besteht aus:
- Acrylamid,
- Polyethylenimin,
- und mindestens einem ethylenisch ungesättigten kationischen Monomer, das aus der Gruppe ausgewählt ist, die Monomere der Art Dialkylaminoalkyl(meth)acrylamid, Diallylamin, Methyldiallylamin und deren quaternäres Ammoniumsalz oder Säuresalz, vorzugsweise Diallyldimethylammoniumchlorid umfasst.

10. Papier, Karton oder dergleichen nach Anspruch 1 oder 2, **dadurch gekennzeichnet, dass** das Basis(co)polymer verzweigt ist.

11. Papier, Karton oder dergleichen nach Anspruch 1 oder 2, **dadurch gekennzeichnet, dass** das Hofmann-Abbauprodukt mit einer Konzentration von über 4 Gew.-%, vorzugsweise über 7%, vorteilhafter Weise über 8% hergestellt ist.

12. Papier, Karton oder dergleichen nach Anspruch 1 oder 2, **dadurch gekennzeichnet, dass** das Basis(co)polymer nach dem Erhalt des endgültigen Basis(co)polymers durch Aufpropfen der polyfunktionellen Verbindung modifiziert wird.

## Claims

1. Paper, Paperboard or the like comprising a cationic or amphoteric (co)polymer obtained by Hofmann degradation reaction, in aqueous solution, in the presence of an alkaline-earth and/or alkali metal hydroxide and of an alkaline-earth and/or alkali metal hypohalide, on a base (co)polymer comprising at least one nonionic monomer chosen from the group comprising acrylamide (and/or methacrylamide) and N,N-dimethylacrylamide, **characterized in that** the base (co)polymer is modified beforehand with at least one polyfunctional compound containing at least 3 heteroatoms chosen from N, S, O and P and each having at least one mobile hydrogen.

2. Paper, cardboard or the like, obtained by a manufacturing method of paper, paperboard or the like implementing as a flocculating, retention and/ or drainage, and dry strength agent, a cationic or amphoteric (co)polymer obtained by a Hofmann degradation reaction, in aqueous solution, in the presence of an alkaline-earth and/or alkali metal hydroxide and of an alkaline-earth and/or alkali metal hypohalide, on a base (co)polymer comprising at least one nonionic monomer chosen from the group comprising acrylamide (and/or methacrylamide) and N,N-dimethylacrylamide, **characterized in that** the base (co)polymer is modified beforehand with at least one polyfunctional compound containing at least 3 heteroatoms chosen from N, S, O and P and each having at least one mobile hydrogen.

3. Paper, cardboard or the like as claimed in claim 1 or 2, **characterized in that** the polyfunctional compound is chosen from the group comprising polyethyleneimines, polyamines (primary or secondary), polyallylamines, polythiols, polyalcohols, polyamide-epichlorohydrin resins and polyamine amides.

4. Paper, cardboard or the like as claimed in claim 1 or 2, **characterized in that** the polyfunctional compound is polyethyleneimine.

5. Paper, cardboard or the like as claimed in claim 1 or 2, **characterized in that** the polyfunctional compound is polyamine amide.

6. Paper, cardboard or the like as claimed in claim 1 or 2, **characterized in that** the base (co)polymer is modified by incorporation of the polyfunctional compound before or during the polymerization of the comonomers.

7. Paper, cardboard or the like as claimed in claim 1 or 2, **characterized in that** the base (co)polymer contains at least 5 mol% of nonionic monomer and at least 1000 ppm of polyfunctional compound.

8. Paper, cardboard or the like as claimed in claim 1 or 2, **characterized in that** the base (co)polymer additionally contains at least:
∘ one unsaturated cationic ethylenic monomer, preferably chosen from the group comprising monomers of dialkylaminoalkyl (meth)acrylamide, diallylamine and methyldiallylamine type and the quaternary ammonium or acid salts thereof, and in particular, dimethyldiallylammonium chloride (DADMAC), acrylamidopropyltrimethylammonium chloride (APTAC) and/or methacrylamidopropyltrimethylammonium chloride (MAPTAC),
∘ and/or one nonionic monomer preferably chosen from the group comprising N-vinyl acetamide, N-vinyl formamide, N-vinylpyrrolidone and/or vinyl acetate,
∘ and/or one anionic monomer of acid or anhydride type chosen from the group comprising (meth)acrylic acid, acrylamidomethylpropylsulfonic acid, itaconic acid, maleic anhydride, maleic acid, methallylsulfonic acid, vinylsulfonic acid and salts thereof.

9. Paper, cardboard or the like as claimed in claim 1 or 2, **characterized in that** the base (co)polymer consists of:
- acrylamide,
- polyethyleneimine,
- and at least one unsaturated cationic ethylenic comonomer, chosen from the group comprising monomers of dialkylaminoalkyl (meth)acrylamide, diallylamine and methyldiallylamine type and the quaternary ammonium or acid salts thereof, preferably dimethyldiallylammonium chloride.

10. Paper, cardboard or the like as claimed in claim 1 or 2, **characterized in that** the base (co)polymer is branched.

11. Paper, cardboard or the like as claimed in claim 1 or 2, **characterized in that** the Hofinann degradation product is produced at a concentration of greater than 4% by weight, preferably greater than 7%, advantageously greater than 8% by weight.

12. Paper, cardboard or the like as claimed in claim 1 or 2, **characterized in that** the base (co)polymer is modified by grafting of the polyfunctional compound after the final base (co)polymer has been obtained.
